# FASCICULE DE BREVET EUROPEEN

(11) **EP 4 314 492 B1**
(45) Date de publication et mention de la délivrance du brevet: **30.10.2024**
(21) Numéro de dépôt: 22715141.2
(22) Date de dépôt: 22.03.2022
(51) Int. Cl.: F01D 5/30, F01D 5/32

(54) **CLINQUANT POUR AUBE MOBILE DE TURBOMACHINE, ENSEMBLE POUR ROTOR DE TURBOMACHINE ET TURBOMACHINE**
EINLAGE FÜR LAUFSCHAUFEL EINER STRÖMUNGSMASCHINE, ANORDNUNG FÜR ROTOR EINER STRÖMUNGSMASCHINE UND STRÖMUNGSMASCHINE
SHIM FOR TURBOMACHINE BLADE, ASSEMBLY FOR TURBOMACHINE ROTOR AND TURBOMACHINE

(30) Priorité: 01.04.2021 FR 2103391
(43) Date de publication de la demande: 07.02.2024
(73) Titulaire: SAFRAN AIRCRAFT ENGINES, 75015 Paris (FR)
(72) Inventeur: GOYON, Vincent, 77550 MOISSY-CRAMAYEL (FR); MULHEIM, Pierre Marie, 77550 MOISSY-CRAMAYEL (FR); MARTINE, Arnaud, 77550 MOISSY-CRAMAYEL (FR); GIGUET, Antoine, 77550 MOISSY-CRAMAYEL (FR); DELAPORTE, Nicolas Daniel, 77550 MOISSY-CRAMAYEL (FR)
(74) Mandataire: Cabinet Camus Lebkiri
(86) Numéro de dépôt international: PCT/FR2022/050524
(87) Numéro de publication internationale: WO 2022/208000

(56) Documents cités:
- FR-A1- 2 921 409
- US-A- 2 928 651

## Description

### DOMAINE TECHNIQUE DE L'INVENTION

La présente invention concerne un clinquant pour une aube de rotor de turbomachine. Elle concerne également un ensemble pour rotor comportant un tel clinquant monté sur un pied d'aube et une turbomachine équipée d'au moins un tel ensemble.

L'invention trouve des applications dans le domaine de l'aéronautique et, en particulier, dans le domaine des rotors de turbomachines pour augmenter la durée de vie desdits rotors.

### ARRIERE-PLAN TECHNOLOGIQUE DE L'INVENTION

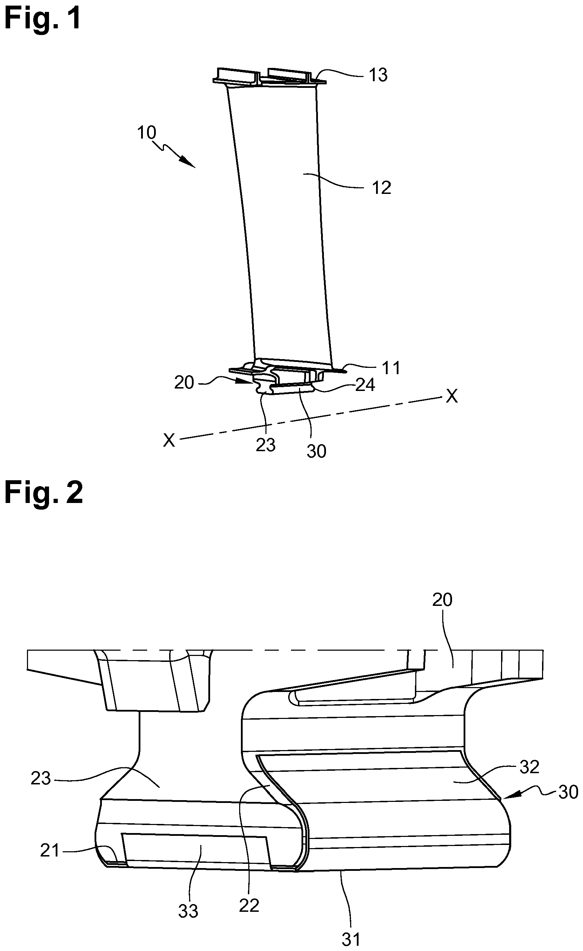

Il est connu, en aéronautique, qu'une aube de rotor 10, dont un exemple est représenté sur la figure 1, comprend une pale 12 munie, en partie inférieure, d'une plateforme 11 prolongée radialement par un pied 20 destiné à être inséré dans une cavité ménagée dans la périphérie externe d'un disque du rotor. Le pied 20 de l'aube de rotor 10 - appelée aussi aube mobile - est retenu radialement dans la cavité du disque par coopération de formes entre ledit pied, généralement en forme de queue d'aronde, et la cavité, généralement en forme d'alvéole. En partie supérieure, la pale 12 est munie d'un talon 13 destiné à être disposé bord à bord avec le talon des aubes mobiles adjacentes de manière à former une couronne circonférentielle rotative délimitant une surface de révolution autour de l'axe de rotation XX du disque.

Un exemple d'un moyen de blocage d'une aube de rotor selon l'état de la technique est décrit dans le document US 2 928 651 A.

Lors du fonctionnement du rotor, le contact entre les pieds d'aubes, par exemple en aluminure de titane, et le disque, généralement en alliage à base de nickel, entraine une usure prématurée des pieds d'aubes. Or, une usure importante des pieds d'aubes peut amener les talons des aubes mobiles à se chevaucher voire à se déboiter les uns des autres et ainsi générer une perte de contact entre les talons et/ou une amorce de crique dans la zone de contact du pied d'aube entraînant par la suite la rupture du pied d'aube avec une potentielle libération de l'aube dans la veine de la turbomachine.

Afin de limiter l'usure des pieds d'aubes et des cavités du disque, il est connu de placer une pièce de contact, appelée clinquant et référencée 30, au niveau des interfaces de contact, communément dénommées portées, entre les pieds d'aubes et les cavités du disque. Le clinquant 30, solidaire du pied 20 de l'aube mobile et en contact avec le disque, reprend une majeure partie de l'énergie dissipée par frottement dans le contact entre ledit pied d'aube et le disque, ce qui permet de limiter l'usure du pied d'aube.

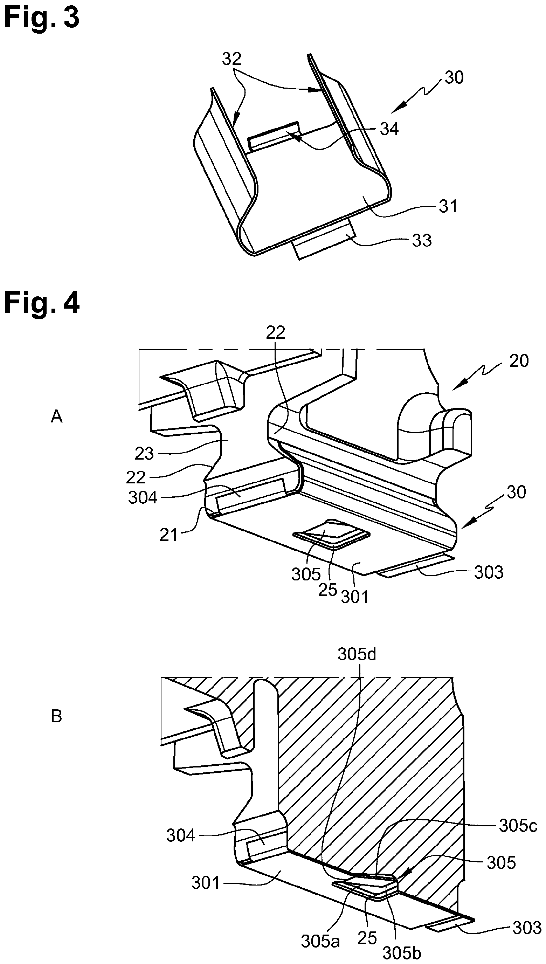

La figure 2 représente, de façon agrandie, le pied 20 de l'aube mobile 10 de la figure 1, autour duquel est monté un clinquant classique 30. Un exemple de ce clinquant classique 30 est représenté en perspective sur la figure 3. Un autre exemple de clinquant selon l'état de la technique est décrit dans le document FR 2 921 409 A1.

Comme on peut le voir sur les figures 2 et 3, le clinquant 30 comporte une section de forme globale en U, formée par deux branches latérales 32 destinées à recouvrir les flancs latéraux 22 du pied 20 de l'aube mobile 10 et à maintenir le clinquant 30 sur le pied 20. Le clinquant 30 comporte également une base 31, appelée aussi surface inférieure du clinquant, qui relie les branches latérales 32 entre elles et recouvrant la face inférieure 21 du pied 20.

Afin d'éviter que le clinquant 30 ne se désengage du pied 20, la base 31 du clinquant comprend des languettes radiales 33, 34 en appui contre les faces amont 23 et aval 24 du pied 20 de l'aube. Les languettes radiales 33, 34 sont des lamelles découpées à l'extrémité de la base 31 et rabattues radialement le long des faces amont et aval 23, 24 du pied 20. Ces languettes radiales 33, 34 s'étendent sur une largeur plus ou moins grande, entre les branches latérales 32 du clinquant, et forment des butées qui permettent de bloquer les mouvements axiaux relatifs entre le pied 20 et le clinquant 30.

Toutefois, malgré la présence de ces languettes radiales, les opérateurs de maintenance des turbomachines ont remarqué que les clinquants ont tendance à se déplacer axialement, ce qui endommage les languettes radiales et même les sectionne. En effet, du fait de leur pliage radial lors de la phase de fabrication et/ou de leur dépliage lors de la phase de montage, les languettes radiales sont fragilisées et les frottements, générés par le déplacement axial répété des clinquants, ont pour effet de les sectionner. Une fois les languettes radiales cassées, les clinquants peuvent se désengager partiellement ou même totalement des pieds d'aubes, ce qui nécessite de déposer le rotor pour le réparer. La dépose et la réparation du rotor occasionnent des coûts non négligeables de réparation (pièces et main d'oeuvre) et d'immobilisation de la turbomachine.

Il existe donc un réel besoin d'un clinquant plus robuste et plus résistant aux frottements.

### RESUME DE L'INVENTION

Pour répondre aux problèmes évoqués ci-dessus de robustesse et de résistance aux frottements des clinquants, le demandeur propose un clinquant pour aube mobile, équipé d'une languette oblique configurée pour être insérée dans un logement de la face inférieure du pied d'aube.

Selon un premier aspect, l'invention concerne un clinquant pour aube mobile de turbomachine, configuré pour être monté sur un pied de ladite aube mobile et comprenant des moyens de blocage pour interdire au moins certains des mouvements relatifs entre le pied d'aube et ledit clinquant. Ce clinquant comporte une section de forme globale en U formée par deux branches latérales reliées par une surface inférieure, la surface inférieure recouvrant une face inférieure du pied d'aube, les branches latérales recouvrant chacune une partie au moins de deux flancs latéraux du pied d'aube.

Ce clinquant se caractérise par le fait que les moyens de blocage comportent au moins une languette oblique, partiellement découpée dans une surface inférieure du clinquant et formant, par rapport à ladite surface inférieure du clinquant, une protubérance en plan incliné apte à s'insérer dans un logement formé dans une face inférieure du pied d'aube.

La languette oblique du clinquant selon l'invention présente, d'une part, l'avantage d'être pliée une seule fois lors de la fabrication ou du montage du clinquant, ce qui évite sa fragilisation. Cette languette oblique présente en outre l'avantage d'être sensiblement parallèle au sens des efforts et donc de pouvoir résister à ces efforts lors des déplacements relatifs entre le pied d'aube et le clinquant, ce qui lui assure une plus longue durée de vie. Elle présente en plus l'avantage de ne pas entraver le fonctionnement de l'aube car elle est mise en oeuvre sur la face inférieure du pied d'aube qui est une face non fonctionnelle dudit pied d'aube.

L'utilisation d'un clinquant selon l'invention, dans une turbomachine, permet de limiter le nombre de déposes moteur, de réduire le nombre de pièces à changer lors d'une dépose moteur et, donc, de réduire les frais de maintenance de la turbomachine. Elle permet également d'augmenter la durée de vie des turbomachines d'améliorer la sécurité des vols.

Dans la présente demande, les termes « inférieur », « supérieur » et « externe » sont interprétés en référence à la position d'une pièce ou d'une surface par rapport à l'axe de rotation de la turbomachine, une surface inférieure étant plus proche de l'axe de rotation qu'une surface extérieure ou externe. Le terme « latéral » est interprété comme « qui est situé sur les côtés d'une pièce qui s'étend radialement » suivant un axe perpendiculaire à l'axe de rotation XX. Le terme « axial » est à interpréter comme « suivant la direction de l'axe de rotation » et le terme « radial » comme « suivant une direction perpendiculaire à l'axe de rotation » ou « suivant la direction d'un rayon de la couronne d'aubes ». Les termes « amont » et « aval » seront interprétés en référence au sens d'écoulement du flux d'air dans la turbomachine.

Outre les caractéristiques qui viennent d'être évoquées dans le paragraphe précédent, le clinquant selon le premier aspect de l'invention peut présenter une ou plusieurs caractéristiques complémentaires parmi les suivantes, considérées individuellement ou selon toutes les combinaisons techniquement possibles :
- la languette oblique comporte des bords libres, détachés de la surface inférieure du clinquant, et un bord non-libre attaché à ladite surface inférieure.
- le plan incliné formé par la languette oblique s'étend suivant un sens amont vers aval.
- la languette oblique est de forme au moins partiellement rectangulaire et est inclinée, par rapport à la surface inférieure du clinquant, suivant un angle inférieur à 45°.
- la languette oblique est inclinée, par rapport à la surface inférieure du clinquant, suivant un angle compris entre environ 10° et 25°.
- la languette oblique présente une forme de lamelle plane, mise en forme par pliage de son bord non-libre.
- la languette oblique présente une forme de lamelle de profil au moins partiellement courbe, mise en forme par emboutissage.

Un deuxième aspect de l'invention concerne un ensemble pour rotor de turbomachine, comportant une aube mobile configurée pour être mobile en rotation autour d'un axe de rotation et comprenant une pale s'étendant radialement entre un talon d'aube et un pied d'aube, ledit pied d'aube comprenant une face inférieure s'étendant dans un plan parallèle à l'axe de rotation. L'ensemble se caractérise par le fait qu'il comporte un clinquant tel que défini ci-dessus et monté au moins partiellement autour du pied d'aube, la face inférieure du pied d'aube comportant un renfoncement formant logement pour la languette oblique du clinquant.

Selon certains modes de réalisation du deuxième aspect de l'invention, le pied d'aube est configuré pour être monté dans une alvéole d'un disque de la turbomachine et l'ensemble est caractérisé par le fait qu'une hauteur entre la surface inférieure du clinquant et le bord libre de la languette oblique le plus éloigné de ladite surface inférieure est supérieure à un jeu entre la face inférieure du pied d'aube et un fond de l'alvéole du disque.

Selon certains modes de réalisation du deuxième aspect de l'invention, le renfoncement du pied d'aube comporte une paroi supérieure oblique formant un plan incliné sensiblement parallèle au plan incliné formé par la languette oblique.

Un troisième aspect de l'invention concerne une turbomachine, caractérisée en ce qu'elle comporte au moins un ensemble pour rotor tel que défini ci-dessus.

### BREVE DESCRIPTION DES FIGURES

D'autres avantages et caractéristiques de l'invention apparaîtront à la lecture de la description qui suit, illustrée par les figures dans lesquelles :
La figure 1, déjà décrite, représente une vue schématique en perspective d'une aube mobile de turbomachine selon l'état de la technique ;
La figure 2, déjà décrite, représente une vue schématique en perspective d'un pied d'aube mobile équipé d'un clinquant selon l'état de la technique ;
La figure 3, déjà décrite, représente schématiquement une vue en perspective d'un clinquant selon l'état de la technique ;
La figure 4 représente une vue schématique en perspective (A) et une vue schématique en coupe (B) d'un pied d'aube équipé d'un clinquant selon l'invention ;
La figure 5 représente une vue schématique de face, en coupe, d'un pied d'aube équipé d'un clinquant selon l'invention, monté dans une alvéole de disque ;
La figure 6 représente une vue schématique de coté, en coupe, d'un pied d'aube équipé d'un clinquant selon l'invention ;
La figure 7 représente une vue schématique en coupe d'un mode de réalisation de la languette oblique du clinquant selon l'invention ; et
La figure 8 représente une vue schématique de dessous de plusieurs modes de réalisation d'une languette oblique selon l'invention.

### DESCRIPTION DETAILLEE

Un exemple de réalisation d'un clinquant pour aube mobile, configuré pour être plus robuste et plus résistant aux frottements que les clinquants classiques, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

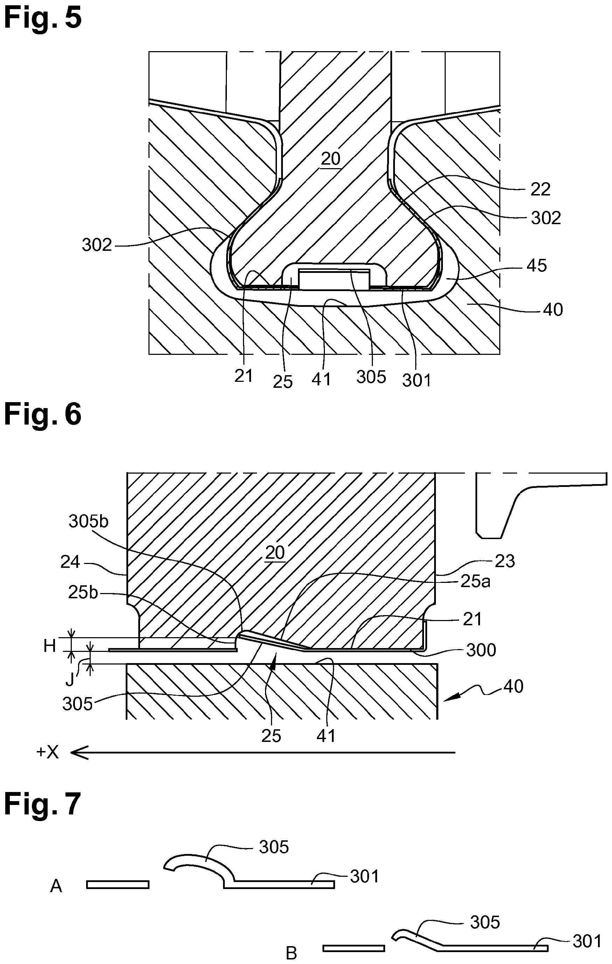

Un exemple d'un clinquant selon l'invention, monté autour d'un pied d'aube mobile, est représenté selon une vue en perspective sur la partie A de la figure 4 et selon une vue en coupe sur la partie 8 de la figure 4. Ce clinquant est représenté sur la figure 5, selon une vue en coupe de face, monté autour d'un pied d'aube logé au sein d'une alvéole d'un disque du rotor. Ce même clinquant est également représenté, selon une vue en coupe de côté, sur la figure 6.

Ce clinquant, référencé 300, est conçu pour être monté autour d'un pied d'aube 20, au niveau notamment des interfaces de contact entre ledit pied d'aube 20 et une cavité 45 d'un disque du rotor, adaptée pour recevoir ce pied d'aube. En effet, pour rappel, chaque pied 20 de l'aube mobile 10 est engagé dans une cavité 45 ménagée dans la périphérie externe du disque 40 et maintenu radialement dans ladite cavité par coopération de forme entre le pied 20 et la cavité 45. Généralement, le pied d'aube 20 est en forme de queue d'aronde et la cavité 45 du disque en forme d'alvéole. Le pied 20 de l'aube mobile 10 comprend une face inférieure 21, deux flancs latéraux 22, une face amont 23 et une face aval 24.

Lors de la mise en rotation du disque 40 du rotor, les aubes mobiles 10 sont soumises aux efforts centrifuges et, sous l'effet de ces efforts centrifuges, les flancs latéraux 22 formant les interfaces de contact des pieds d'aubes 20 viennent en butée contre les interfaces de contact des cavités 45 du disque. Un clinquant 300 est positionné autour de chaque pied de l'aube mobile, entre l'interface de contact du pied d'aube et l'interface de contact de la cavité correspondante du disque, de sorte à limiter l'usure desdits pieds d'aubes.

Comme la plupart des clinquants, le clinquant 300 selon l'invention comporte une section de forme globale en U, formée par deux branches latérales 302 reliées par une surface inférieure 301. La surface inférieure 301 du clinquant, ou base du clinquant, recouvre la face inférieure 21 du pied d'aube 20. Les branches latérales 302 recouvrent chacune une partie au moins des deux flancs latéraux 22 du pied d'aube 20.

Le clinquant selon l'invention peut comprendre également des languettes radiales 303, 304, réalisées par découpe de la surface inférieure 301 et pliage radial le long des faces amont 23 et aval 24 du pied d'aube 20. Chacune des languettes radiales 303, 304 est découpée à une des extrémités libres de la surface inférieure 301, c'est-à-dire sur un des côtés de la surface inférieure 301 s'étendant entre les deux branches latérales 302 du clinquant, avec une forme prédéfinie, par exemple rectangulaire ou carrée, de dimensions réduites par rapport aux dimensions des faces amont et aval du pied d'aube. Lors de la fabrication du clinquant 300 ou lors du montage dudit clinquant sur le pied d'aube 20, chaque languette radiale 303, 304 est pliée et rabattue radialement le long de la face amont 23 ou de la face avale 24 du pied d'aube de sorte à former, avec la surface inférieure 301, un angle sensiblement droit. Ces languettes radiales 303, 304 forment ainsi des butées axiales permettant de limiter les mouvements axiaux relatifs entre le pied 20 et le clinquant 300.

Le clinquant 300 selon l'invention comporte une ou plusieurs languette(s) obliques 305. Cette/ces languettes obliques 305 sont réalisées en plus des languettes radiales 303, 304 pour palier au problème d'usure desdites languettes radiales. Si la/les languettes obliques 305 sont plus résistantes que les languettes radiales (par exemple avec un choix de matériau différent ou un traitement appliqué au matériau), alors elles peuvent être réalisées à la place desdites languettes radiales. Dans la suite de la description, on considérera la variante dans laquelle la/les languettes obliques forment un moyen de blocage supplémentaire de celui formé par les languettes radiales.

Dans les exemples A et B de la figure 4, une seule languette oblique 305 est représentée sensiblement au centre de la surface inférieure 301 du clinquant 300. L'homme du métier comprendra cependant que plusieurs languettes obliques peuvent être réalisées dans la surface inférieure 301, réparties de façon symétrique ou asymétrique dans ladite surface inférieure, ces languettes obliques pouvant toutes être sensiblement identiques à la languette oblique 305 décrite par la suite et représentée sur les figures 4, 5 et 6.

La languette oblique 305 est une lame ou lamelle partiellement découpée dans la surface inférieure 301 du clinquant et ayant un contour dont une partie forme un bord libre et une autre partie forme un bord non-libre, attaché à ladite surface inférieure. On appelle « bord libre », un bord qui est détaché de la surface inférieure du clinquant, par opposition au bord non-libre qui est relié ou attaché à ladite surface inférieure. Cette lame ou lamelle est placée dans une position oblique par rapport à la surface inférieure 301 du clinquant, c'est-à-dire qu'elle s'étend suivant un plan incliné, dans une position formant un angle ni droit ni plat avec ladite surface inférieure 301. L'angle formé par la languette oblique 305, par rapport à la surface inférieure 301, peut être par exemple compris entre 10° et 25°. Quel que soit son angle d'inclinaison, la languette oblique 305 forme une protubérance en plan incliné par rapport à la surface inférieure du clinquant, cette protubérance étant conçue pour s'insérer à l'intérieur du pied d'aube, comme expliqué par la suite.

Le plan incliné formé par la languette oblique 305 s'étend, de préférence, dans le sens positif de l'axe X, c'est-à-dire dans le sens de l'écoulement d'air, de l'amont vers aval, ce sens étant favorable à l'installation du clinquant sur le pied d'aube. Bien entendu, la languette oblique 305 peut d'étendre suivant des sens différents dans la mesure où la languette oblique bloque le déplacement relatif du pied d'aube par rapport au clinquant quel que soit le sens de ladite languette oblique.

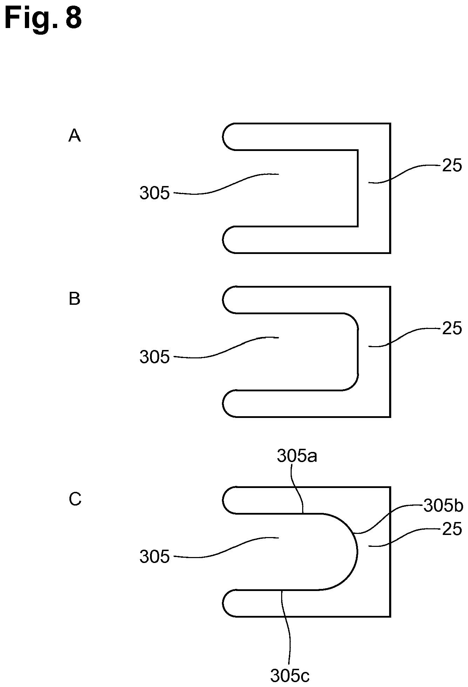

La languette oblique 305 peut, par exemple, être de forme sensiblement carrée ou rectangulaire avec trois côtés libres 305a, 305b, 305c, c'est-à-dire des côtés entièrement découpés et donc non liés à la surface inférieure 301, et un côté non-libre 305d, c'est-à-dire un côté attaché au moins en partie à la surface inférieure 301. La figure 8 représente plusieurs exemples de formes de la languette oblique 305. Dans l'exemple A de la figure 8, la languette oblique 305 est de forme sensiblement rectangulaire. Dans l'exemple B de la figure 8, la languette oblique 305 est de forme sensiblement rectangulaire avec des coins arrondis à chaque angle entre deux côtés libres. Dans l'exemple C de la figure 8, la languette oblique 305 est de forme arrondie, avec deux côtés libres 305a, 305c rectilignes et un côté libre 305b en arc de cercle.

La languette oblique 305 est conçue pour se loger dans un renfoncement 25 du pied d'aube 20. Ce renfoncement 25 présente une forme et des dimensions adaptées à celles de la languette oblique 305 de sorte à former un logement apte à recevoir ladite languette. Comme représenté sur les figures 4 à 6, le renfoncement 25 est un orifice non traversant formé dans la face inférieure 21 du pied d'aube 20. Ce renfoncement 25 présente des côtés dont les dimensions sont identiques ou légèrement supérieures aux dimensions des côtés libres 305a, 305b, 305c de la languette oblique 305 de sorte à permettre l'insertion de ladite languette au sein dudit renfoncement. Le terme « légèrement » s'entend comme identique avec un jeu en plus, adapté pour permettre le pliage de la languette oblique à l'intérieur du renfoncement.

Le renfoncement 25 peut comporter une paroi supérieure 25a, ou plafond, oblique, c'est-à-dire inclinée avec une inclinaison plus ou moins similaire à celle de la languette oblique 305. Autrement dit, le plafond oblique du renfoncement 25 forme un plan incliné, qui peut être parallèle au plan incliné formé par la languette oblique 305. Dans l'exemple des figures 4 et 6, le renfoncement 25 est de forme rectangulaire, avec des dimensions égales ou légèrement supérieures à celles de la languette oblique 305, et son plafond 25a est incliné, par rapport à la surface générale de la face inférieure 21 du pied d'aube 20, d'un angle sensiblement égal à l'angle d'inclinaison de la languette oblique 305.

Selon certains modes de réalisation, et afin d'assurer un positionnement tout à fait stable du clinquant, la distance ou hauteur H entre la surface inférieure 301 du clinquant et l'extrémité libre 305b de la languette oblique, dans le renfoncement 25, est supérieure à la distance ou jeu J entre la face inférieure 21 du pied d'aube et le fond 41 de l'alvéole du disque 40. L'extrémité libre 305b est le bord libre de la languette oblique 305 qui est le plus éloigné de la surface inférieure 301 du clinquant.

Dans certains modes de réalisation, comme celui montré sur la figure 6, la paroi aval 25b du renfoncement 25 peut être sensiblement arrondie de sorte à être parallèle à la trajectoire de la languette oblique 305 lorsque celle-ci entre dans le renfoncement.

Dans certains modes de réalisation, la languette oblique 305 est pliée préalablement à son insertion dans le renfoncement 25 du pied d'aube. En particulier, après avoir été découpée dans la surface inférieure 301 du clinquant 300, la languette 305 peut être rendue oblique par une opération de pliage, avant montage du clinquant sur le pied d'aube. Lors du montage, la languette oblique 305 est apte à s'insérer, par élasticité, dans le renfoncement 25 du pied d'aube. En effet, le clinquant 300 possède une certaine flexibilité due notamment au choix du matériau (par exemple l'aluminure de titane) et également à sa faible épaisseur (par exemple 0,08mm ou 0,1 6mm). Cette flexibilité permet, non seulement la mise en forme du clinquant autour du pied d'aube, mais également la mise en place de la languette oblique 305 dans le renfoncement 25 du pied d'aube. Ainsi, la languette oblique n'est pliée qu'une seule fois, soit au moment du montage du clinquant sur le pied d'aube, soit au moment de l'embouti des deux branches latérales 302. Par sa flexibilité, la languette oblique 305 présente un certain effet ressort qui lui permet, lorsqu'elle est montée sur le pied d'aube, de se déplier un peu et, une fois dans le renfoncement 25 du pied d'aube, de se déplier par effet ressort.

Dans certains modes de réalisation, la languette 305 peut être pliée, par une action humaine ou mécanique, après que le clinquant 300 ait été monté sur le pied d'aube. Dans ces modes de réalisation, il peut être avantageux que la paroi supérieure 25a du renfoncement soit inclinée car cette inclinaison peut servir de butée à la languette oblique lors de l'opération de pliage de ladite languette.

Dans les modes de réalisation décrits précédemment, la languette oblique 305 peut avoir une section plane, comme représenté dans les exemples des figures 4 et 6. Dans ces modes de réalisation, la languette oblique, vue en coupe, est rectiligne.

Dans d'autres modes de réalisation, la languette oblique 305 peut présenter un profil courbe ou convexe, comme représenté dans les exemples de la figure 7. Dans ces modes de réalisation, la languette oblique 305 peut présenter un rayon de courbure sur toute sa longueur (exemple de la partie A de la figure 7) ou sur une partie seulement de sa longueur, l'autre partie étant plane (exemple de la partie B de la figure 7). Dans une variante, la languette oblique 305 peut être bombée, c'est-à-dire qu'une partie de sa superficie a la forme d'une demi-sphère. Dans ces modes de réalisation, la languette oblique est mise en forme par emboutissage.

Bien que décrit à travers un certain nombre d'exemples, variantes et modes de réalisation, le clinquant pour aube mobile selon l'invention comprend divers variantes, modifications et perfectionnements qui apparaîtront de façon évidente à l'homme du métier.

## Revendications

1. Clinquant (300) pour aube mobile (10) de turbomachine, configuré pour être monté sur un pied (20) de ladite aube mobile et comprenant :
- une section de forme globale en U formée par deux branches latérales (302) reliées par une surface inférieure (301), la surface inférieure (301) recouvrant une face inférieure (21) du pied d'aube (20), les branches latérales (302) recouvrant chacune une partie au moins de deux flancs latéraux (22) du pied d'aube (20) ; et
- des moyens de blocage pour interdire au moins certains des mouvements relatifs entre le pied d'aube et ledit clinquant,
**caractérisé en ce que** lesdits moyens de blocage comportent au moins une languette oblique (305), partiellement découpée dans la surface inférieure (301) du clinquant et formant, par rapport à ladite surface inférieure du clinquant, une protubérance en plan incliné apte à s'insérer dans un logement (25) formé dans la face inférieure (21) du pied d'aube.

2. Clinquant selon la revendication 1, **caractérisé en ce que** la languette oblique (305) comporte des bords libres (305a, 305c, 305d), détachés de la surface inférieure (30) du clinquant, et un bord non-libre (305b) attaché à ladite surface inférieure.

3. Clinquant selon la revendication 1 ou 2, **caractérisé en ce que** le plan incliné formé par la languette oblique (305) s'étend suivant un sens amont vers aval.

4. Clinquant selon l'une quelconque des revendications 1 à 3, **caractérisé en ce que** la languette oblique (305) est de forme au moins partiellement rectangulaire et est inclinée, par rapport à la surface inférieure (301) du clinquant, suivant un angle inférieur à 45°.

5. Clinquant selon la revendication 4, **caractérisé en ce que** la languette oblique (305) est inclinée, par rapport à la surface inférieure (301) du clinquant, suivant un angle compris entre environ 10° et 25°.

6. Clinquant selon l'une quelconque des revendications 1 à 5, **caractérisé en ce que** la languette oblique (305) présente une forme de lamelle plane, mise en forme par pliage de son bord non-libre (305b).

7. Clinquant selon l'une quelconque des revendications 1 à 5, **caractérisé en ce que** la languette oblique (305) présente une forme de lamelle de profil au moins partiellement courbe, mise en forme par emboutissage.

8. Ensemble pour rotor de turbomachine, comportant une aube mobile (10) configurée pour être mobile en rotation autour d'un axe de rotation (XX) et comprenant une pale (12) s'étendant radialement entre un talon (13) et un pied d'aube (20), ledit pied d'aube comprenant une face inférieure (21) s'étendant dans un plan parallèle à l'axe de rotation (XX),
**caractérisé en ce qu'**il comporte un clinquant (300) selon l'une quelconque des revendications 1 à 7, monté au moins partiellement autour du pied d'aube (20), la face inférieure (21) du pied d'aube comportant un renfoncement (25) formant logement pour la languette oblique (305) du clinquant.

9. Ensemble selon la revendication 8, dans lequel le pied d'aube (20) est configuré pour être monté dans une alvéole (45) d'un disque de la turbomachine, **caractérisé en ce qu'**une hauteur (H) entre la surface inférieure (301) du clinquant et le bord libre (305b) de la languette oblique le plus éloigné de ladite surface inférieure est supérieure à un jeu (J) entre la face inférieure (21) du pied d'aube et un fond (41) de l'alvéole du disque.

10. Ensemble selon la revendication 8 ou 9, **caractérisé en ce que** le renfoncement (25) du pied d'aube comporte une paroi supérieure oblique (25a) formant un plan incliné sensiblement parallèle au plan incliné formé par la languette oblique (305).

11. Turbomachine comportant un rotor comprenant au moins un ensemble selon l'une quelconque des revendications 8 à 10.

## Patentansprüche

1. Kontaktstück (300) für eine Laufschaufel (10) einer Turbomaschine, das so beschaffen ist, dass es an einem Fuß (20) der Laufschaufel angebracht werden kann, und Folgendes umfasst:
- einen insgesamt U-förmigen Abschnitt, der durch zwei Seitenschenkel (302) gebildet wird, die durch eine untere Fläche (301) verbunden sind, wobei die untere Fläche (301) eine Unterseite (21) des Schaufelfußes (20) bedeckt und die Seitenschenkel (302) jeweils einen Teil von mindestens zwei Seitenflanken (22) des Schaufelfußes (20) bedecken; und
- Arretiermittel, um zumindest einige der Relativbewegungen zwischen dem Schaufelfuß und dem Kontaktstück zu unterbinden,
**dadurch gekennzeichnet, dass** die Arretiermittel mindestens eine schräge Lasche (305) umfassen, die in der unteren Fläche (301) des Kontaktstücks teilweise eingeschnitten ist und in Bezug auf die untere Fläche des Kontaktstücks einen Vorsprung in einer schiefen Ebene bildet, der geeignet ist, in eine Aufnahme (25) eingesetzt zu werden, die in der unteren Fläche (21) des Schaufelfußes ausgebildet ist.

2. Kontaktstück nach Anspruch 1, **dadurch gekennzeichnet, dass** die schräge Lasche (305) freie Kanten (305a, 305c, 305d) aufweist, die von der unteren Fläche (30) des Kontaktstücks gelöst sind, und eine nicht freie Kante (305b), die an der unteren Fläche befestigt ist.

3. Kontaktstück nach Anspruch 1 oder 2, **dadurch gekennzeichnet, dass** die durch die schräge Lasche (305) gebildete schiefe Ebene sich in einer Aufwärts-zu-Abwärtsrichtung erstreckt.

4. Kontaktstück nach einem der Ansprüche 1 bis 3, **dadurch gekennzeichnet, dass** die schräge Lasche (305) zumindest teilweise rechteckig geformt ist und in Bezug auf die untere Fläche (301) des Kontaktstücks unter einem Winkel von weniger als 45° geneigt ist.

5. Kontaktstück nach Anspruch 4, **dadurch gekennzeichnet, dass** die schräge Lasche (305) in Bezug auf die untere Fläche (301) des Kontaktstücks in einem Winkel von ca. 10° bis 25° geneigt ist.

6. Kontaktstück nach einem der Ansprüche 1 bis 5, **dadurch gekennzeichnet, dass** die schräge Lasche (305) die Form einer flachen Lamelle hat, die durch Falten ihrer nicht freien Kante (305b) geformt wird.

7. Kontaktstück nach einem der Ansprüche 1 bis 5, **dadurch gekennzeichnet, dass** die schräge Lasche (305) eine zumindest teilweise gekrümmte Profillamellenform aufweist, die durch Tiefziehen geformt wurde.

8. Anordnung für einen Rotor einer Turbomaschine, mit einer Laufschaufel (10), die so ausgeführt ist, dass sie um eine Drehachse (XX) drehbar ist und ein Schaufelblatt (12) umfasst, das sich radial zwischen einem Absatz (13) und einem Schaufelfuß (20) erstreckt, wobei der Schaufelfuß eine Unterseite (21) umfasst, die sich in einer zur Drehachse (XX) parallelen Ebene erstreckt, **dadurch gekennzeichnet, dass** sie ein Kontaktstück (300) nach einem der Ansprüche 1 bis 7 umfasst, das zumindest teilweise um den Schaufelfuß (20) herum montiert ist, wobei die Unterseite (21) des Schaufelfußes eine Vertiefung (25) umfasst, die eine Aufnahme für die schräge Lasche (305) des Kontaktstücks bildet.

9. Anordnung nach Anspruch 8, in der der Schaufelfuß (20) so ausgeführt ist, dass er in einer Vertiefung (45) einer Scheibe der Turbomaschine montiert werden kann, **dadurch gekennzeichnet, dass** eine Höhe (H) zwischen der Unterseite (301) des Kontaktstücks und der freien Kante (305b) der schrägen Lasche, die am weitesten von der Unterseite entfernt ist, größer ist als ein Spiel (J) zwischen der Unterseite (21) des Schaufelfußes und einem Boden (41) der Vertiefung der Scheibe.

10. Anordnung nach Anspruch 8 oder 9, **dadurch gekennzeichnet, dass** die Vertiefung (25) des Schaufelfußes eine schräge obere Wand (25a) aufweist, die eine geneigte Ebene bildet, die im Wesentlichen parallel zu der durch die schräge Lasche (305) gebildeten geneigten Ebene verläuft.

11. Turbomaschine mit einem Rotor, der mindestens eine Anordnung nach einem der Ansprüche 8 bis 10 umfasst.

## Claims

1. A foil (300) for a rotating blade (10) of a turbomachine, configured to be mounted to a root (20) of said rotating blade and comprising:
- an overall U-shaped cross-section formed by two lateral legs (302) connected through a lower surface (301), the lower surface (301) covering a lower face (21) of the blade root (20), the lateral legs (302) each covering at least part of two lateral flanks (22) of the blade root (20); and
- blocking means for prohibiting at least some of the relative movements between the blade root and said foil,
**characterised in that** said blocking means includes at least one oblique tab (305), partially cut out of a lower surface (301) of the foil and forming, with respect to said lower surface of the foil, a tilted plane protrusion able to be inserted into a housing (25) formed in a lower face (21) of the blade root.

2. The foil according to claim 1, **characterised in that** the oblique tab (305) includes free edges (305a, 305c, 305d) detached from the lower surface (30) of the foil, and a non-free edge (305b) attached to said lower surface.

3. The foil according to claim 1 or 2, **characterised in that** the tilted plane formed by the oblique tab (305) extends from an upstream to downstream direction.

4. The foil according to any one of claims 1 to 3, **characterised in that** the oblique tab (305) is at least partially rectangular in shape and is tilted relative to the lower surface (301) of the foil at an angle of less than 45°.

5. The foil according to claim 4, **characterised in that** the oblique tab (305) is tilted, relative to the lower surface (301) of the foil, at an angle of between about 10° and 25°.

6. The foil according to any one of claims 1 to 5, **characterised in that** the oblique tab (305) has the shape of a planar lamella, shaped by folding its non-free edge (305b).

7. The foil according to any one of claims 1 to 5, **characterised in that** the oblique tab (305) has the shape of a lamella with an at least partially bent profile, shaped by drawing.

8. An assembly for a turbomachine rotor, including a rotating blade (10) configured so as to be rotatably rotating about an axis of rotation (XX) and including a vane (12) radially extending between a heel (13) and a blade root (20), said blade root including a lower face (21) extending in a plane parallel to the axis of rotation (XX), **characterised in that** it includes a foil (300) according to any one of claims 1 to 7, mounted at least partially around the blade root (20), the lower face (21) of the blade root including a recess (25) forming a housing for the oblique tab (305) of the foil.

9. The assembly according to claim 8, wherein the blade root (20) is configured so as to be mounted in an alveolus (45) of a disc of the turbomachine, **characterised in that** a height (H) between the lower surface (301) of the foil and the free edge (305b) of the oblique tab furthest from said lower surface is greater than a clearance (J) between the lower face (21) of the blade root and a bottom (41) of the alveolus of the disc.

10. The assembly according to claim 8 or 9, **characterised in that** the recess (25) of the blade root includes an oblique upper wall (25a) forming a tilted plane substantially parallel to the tilted plane formed by the oblique tab (305).

11. A turbomachine including a rotor comprising at least one assembly according to any one of claims 8 to 10.
